(19) Europäisches Patentamt
European Patent Office
Office européen des brevets

(11) Publication number: **0 006 674 B1**

(12) **EUROPEAN PATENT SPECIFICATION**

(45) Date of publication of patent specification: **03.11.82**

(51) Int. Cl.³: **C 08 L 95/00**, D 06 N 3/10, B 32 B 11/10

(21) Application number: **79200349.3**

(22) Date of filing: **27.06.79**

(54) **Bituminous carpet backing.**

(30) Priority: **04.07.78 NL 7807224**

(43) Date of publication of application: **09.01.80 Bulletin 80/1**

(45) Publication of the grant of the patent: **03.11.82 Bulletin 82/44**

(84) Designated Contracting States: **AT BE CH DE FR GB SE**

(56) References cited:
**DE - A - 1 720 168**
**DE - A - 1 944 337**
**DE - A - 1 946 147**
**DE - A - 2 121 190**
**DE - A - 2 347 269**
**DE - A - 2 628 804**
**DE - A - 2 811 262**
**DE - B - 1 720 162**
**DE - B - 1 720 169**
**FR - A - 2 376 188**
**US - A - 3 856 732**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Blanken, Thomas Carel**
**Badhuisweg 3**
**NL-1031 CM Amsterdam (NL)**
Inventor: **Schellekens, Joannes Cornelius Antonius**
**Badhuisweg 3**
**NL-1031 CM Amsterdam (NL)**

(74) Representative: **Puister, Antonius Tonnis, Mr. et al,**
**P.O. Box 302**
**NL-2501 CH The Hague (NL)**

(56) References cited:
**STRASSEN- UND TIEFBAU, Vol. 31, November 1977, Verlag für Publizität, Isernhagen B. R. GUZMANN "Modifizierung bituminöser Bindemittel mit Polymeren" page 16 to 19**

**EP 0 006 674 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Bituminous carpet backing

Fibrous floor coverings, e.g. carpets, carpet tiles, rugs etc., are known which comprise a fibrous material such as a woven or non-woven fabric. It is also known to provide certain floor coverings, especially those of the non-woven type e.g. felt or tufted floor coverings, with an integral backing layer to protect the floor covering against wear and to improve the dimensional stability thereof. It is important that the floor coverings provided with such backing layers are sufficiently flexible to prevent cracks forming in the backing layer during the transport, storage and laying thereof and are also, when in place on a floor, able to withstand heavy loads without the surface thereof remaining indented for an undesirable length of time after the heavy load has been removed.

The Applicants have now found that the use of a mixture of a bituminous component and a certain type of block copolymer for an integral backing layer of a fibrous floor covering results in sufficient flexibility and satisfactory indentation characteristics.

Therefore the present invention relates to the use of a mixture of

(a) from 50 to 95% w, based on (a)+(b), of a bituminous component comprising a bitumen, and optionally a wax, wherein said bituminous component has a penetration of below 30 (0.1 mm) at 25°C and

(b) from 50 to 5% w, based on (a)+(b), of a block copolymer having the general configuration

$$A—B—(—B—A)_n$$

wherein A is a thermoplastic polymer block of a monovinyl aromatic hydrocarbon and B is an elastomeric polymer block of a conjugated diene and n is an integer, of from 1 to 5, for an integral backing layer of a fibrous floor covering. The proportion of (b), preferably, is 25 to 10% w., based on (a)+(b).

From German patent application 1720168 mixtures of (a) bitumen having a Ring and Ball softening point of not more than 63°C and a penetration of preferably 25—350 (0.1 mm) at 25°C, in particular 30—300 (0.1 mm) at 25°C, (b) a block copolymer of the above type as far as a linear one is concerned, (c) filler and (d) soot are known, as well as their use for roofing. Nothing is said about the use for an integral backing layer of a fibrous floor covering and the requirements therefor as discussed hereinbefore.

Suitably the bituminous component comprises a bitumen derived from a mineral oil although naturally occurring bitumens may also be used. Examples of suitable bitumens include precipitation bitumens, e.g. propane bitumens, blown bitumens, e.g. blown propane bitumens, and mixtures thereof. The bituminous binder may also comprise extenders such as petroleum extracts e.g. aromatic extracts, distillates or residues. The bituminous component may also comprise a wax. Suitable waxes are those having a congealing point of from 50 to 70°C. Suitable amounts of wax are from 0.1 to 75% w, preferably from 5 to 60% w, based on the weight of bitumen present in the bituminous component. Animal, insect, vegetable, synthetic and mineral waxes may be used with those derived from mineral oils being preferred. Examples of mineral oil waxes include bright stock slack wax, medium machine oil slack wax, high melting point waxes and microcrystalline waxes. In the case of slack waxes up to 25%w of oil may be present. Additives to increase the congealing point of the wax may also be present. As stated above the bituminous component has a penetration of below 30 (0.1 mm) at 25°C. and preferably it has a penetration of from 1 to 25 (0.1 mm) at 25°C.

As stated above the backing layer also comprises a block copolymer, which is suitably a thermoplastic rubber, of the general configuration:—

$$A—B—(—B—A)_n$$

The polymer blocks A preferably have a number average molecular weight in the range of from 2,000 to 100,000 particularly from 5,000 to 50,000. The polymer block B preferably has a number average molecular weight in the range of from 25,000 to 1,000,000, particularly from 35,000 to 150,000. Whenever according to the branched configuration two or more blocks B are immediately adjacent to each other they are treated as a single block for purposes of molecular weight. The amount of polymer blocks A in the block copolymers preferably ranges from 10 to 70%w, particularly from 20 to 50%w. As examples of monovinyl aromatics suitable for the preparation of the polymer blocks A in the present block copolymers may be mentioned styrene and alphamethyl·styrene. As conjugated dienes suitable for the preparation of the polymer blocks B in the present block copolymers, preferably dienes with from 4 to 8 carbon atoms per molecule are chosen, particularly butadiene and isoprene. Polymer blocks B may also be derived by the copolymerization of one or more conjugated dienes with one or more monovinyl aromatic compounds. The copolymers may be hydrogenated. Suitable examples of the block copolymers considered herein are polystyrene-poly(isoprene and/or butadiene)-polystyrene block copolymers.

The block copolymers may be formed by a number of different types of processes including the following:

A vinylarene such as styrene may be polymerized in an essentially inert hydrocarbon medium in the presence of mono-functional alkali metal hydrocarbyl initiator such as a lithium alkyl to form a polyvinyl arene block A terminated with a lithium ion. Immediately and without further treatment a conjugated diene such as butadiene is introduced and block copolymerization is effected to produce the intermediate block copolymer A—B associated with the lithium ion. Finally, a vinyl arene such as styrene is introduced and the polymerization continued to form the desired linear polymer

A—B—A.

Linear polymers may also be formed by a coupling process wherein the first stage is as described above to form the initial polymer block A terminated with lithium, followed by introduction of the conjugated diene to form a polymer block having a molecular weight only half of final molecular weight of the conjugated diene polymer block in the ultimate product. At this time, a difunctional coupling agent such as dibromo methane is added to form the desired three block polymer A—B—(—B—A)$_n$, where n is 1, in other words A—B—A, which may contain an insignificant coupling residue in the center block B. This coupling residue is ignored in the generic description of the block copolymers in this specification. Non-linear, i.e., branched block copolymers are readily formed employing multifunctional coupling agents such as, e.g., trichlorobenzene and tetrachloroethane.

The backing layer may also contain an inorganic filler. Suitable fillers include fly ash, asbestos, siliceous fillers such as silicates, calcareous fillers. The preferred fillers are slate dust and/or limestone. Mixtures of different fillers may be used. Suitable amounts of inorganic filler are from 1 to 400%w, preferably from 50 to 250%w, based on weight of the bituminous component and block copolymer. The backing layer may also be coloured by adding pigments thereto.

As stated above the present invention is particularly suitable for non-woven fibrous floor coverings such as felts or tufted floor coverings which may have been prepared by techniques such as needle punching into a backing which is usually a woven fabric. The fibrous floor covering may be composed of natural and/or synthetic fibres. In some cases it is conventional practice to provide the underside of the floor covering with a back coating the essential function of which is adhesive; this so-called primary coating is usually carried out with polymers in latex. The integral backing layer according to the present invention may be applied to the fibrous floor covering, which may or may not have been provided with a primary coating, by any convenient technique. Suitably the bitumen is melted and the other components mixed therein and the resultant mixture, whilst still easily handleable, applied to the fibrous floor covering by pouring and spreading the mixture onto the back of the floor covering or by passing the covering over a roller partly immersed in the mixture. Alternatively the backing layer may be prepared as a separate layer and stuck or welded to the back of the floor covering.

The invention will now be illustrated with reference to the following examples.

Examples

Various backing compositions, the formulations of which are given in the Table, were prepared and applied whilst the bituminous component and copolymer were in the molten state to the backs of tufted carpets to provide backing layers having thicknesses of 1 to 2.5 mm. The tufted carpets having such backing layers showed acceptable flexibility and acceptable indentation characteristics.

In the examples the components used had the following properties. (The penetrations are determined by ASTM D5—61 and softening points by ASTM D36—26).

Bitumen in Examples 1 to 3: A propane bitumen having a penetration of 7.5 (0.1 mm) at 25°C.

Bitumen in Example 4. A mixture of a propane bitumen (80%w) and a blow propane bitumen (20%w), the mixture having a penetration of 5 (0.1 mm) at 25°C.

Bitumen in Example 5: A propane bitumen having a penetration of 16 (0.1 mm) at 25°C.

Bitumen in Example 6: A propane bitumen having a penetration of 7 (0.1 mm) at 25°C.

Wax in Examples 1 to 4: a medium machine oil slack wax having a congealing point of 63°C and an oil content of 9.2%.

Copolymer in Examples 1 to 6: A styrene-butadiene-styrene-block copolymer having number average molecular weight

16,000—74,000—16,000

Slate dust in Examples 2 and 4: Slate dust filler with 96%w of particles having size of from 20 to 149 micrometres.

Limestone in Examples 3, 5 and 6: Limestone filler with 85%w of particles having size below 74 micrometres.

| Example | Bituminous Component Bitumen %w') | Wax %w') | Penetration at 25°C (0.1 mm) | Copolymer %w') | Filler Slate dust %w') | Limestone %w') |
|---|---|---|---|---|---|---|
| 1 | 75 | 10 | 19 | 15 | — | — |
| 2 | 75 | 10 | 19 | 15 | 150 | — |
| 3 | 75 | 10 | 19 | 15 | — | 150 |
| 4 | 59.1 | 26.7 | 20 | 14.2 | 150 | — |
| 5 | 85 | — | 16 | 15 | — | 150 |
| 6 | 85 | — | 7 | 15 | — | 100 |

') based on weight of bituminous component plus copolymer.

**Claims**

1. Use of a mixture of

(a) from 50 to 95% w, based on (a)+(b), of a bituminous component comprising a bitumen, and optionally a wax, wherein said bituminous component has a penetration of below 30 (0.1 mm) at 25°C and

(b) from 50 to 5%w, based on (a)+(b), of a block copolymer having the general configuration

$$A—B—(—B—A)_n$$

wherein A is a thermoplastic polymer block of a monovinyl aromatic hydrocarbon and B is an elastomeric polymer block of a conjugated diene and n is an integer, of from 1 to 5, for an integral backing layer of a fibrous floor covering.

2. Use according to claim 1, characterized in that the bituminous component has a penetration of from 1 to 25 (0.1 mm) at 25°C.

3. Use according to claim 1 or 2, characterized in that the bituminous component also comprises from 0.1 to 75%w, preferably from 5 to 60%w, based on the weight of the bitumen, of a wax.

4. Use according to any one of claims 1 to 3, characterized in that the wax has a congealing point of from 50 to 70°C.

**Revendications**

1. Utilisation d'un mélange de

(a) 50 à 95% en poids, par rapport à (a)+(b), d'un constituant bitumineux comprenant un bitume, et éventuellement une cire, le constituant bitumineux ayant une pénétration inférieure à 30 dixièmes de mm à 25°C et

(b) 50 à 5% en poids, par rapport à (a)+(b), d'un copolymère séquencé ayant la configuration générale

$$A—B—(—B—A)_n$$

dans laquelle A est un bloc de polymère thermoplastique d'un hydrocarbure monovinyl aromatique et B est un bloc de polymère élastomère d'un diène conjugué et n est un nombre entier de 1 à 5, pour une couche dorsale incorporée d'un revêtement fibreux pour sols.

2. Utilisation selon la revendication 1, caractérisée en ce que le constituant bitumineux a une pénétration comprise entre 1 et 25 dixièmes de mm à 25°C.

3. Utilisation selon la revendication 1 ou 2, caractérisée en ce que le constituant bitumineux comprend aussi de 0,1 à 75% en poids, de préférence de 5 à 60% en poids, par rapport au poids du bitume, d'une cire.

4. Utilisation selon l'une quelconque des revendications 1 à 3, caractérisée en ce que la cire a un point de congélation compris entre 50 et 70°C.

**Patentansprüche**

1. Verwendung eines Gemisches aus

(a) von 50 bis 95 Gew.-%, bezogen auf (a)+(b), einer bituminösen Komponente enthaltend ein Bitumen und gegebenenfalls ein Wachs, wobei die genannte bituminöse Komponente eine Penetration von unter 30 (0,1 mm) bei 25°C aufweist und

(b) von 50 bis 5 Gew.-%, bezogen auf (a)+(b), eines Block-Copolymers mit der allgemeinen Konfiguration

$$A—B—(—B—A)_n$$

worin A ein thermoplastischer Polymerblock aus einem monovinylaromatischen Kohlenwasserstoff und B ein elastomerer Polymerblock aus einem konjugierten Dien sind und n eine ganze Zahl von 1 bis 5 bedeutet, für eine integrale Rückenbeschichtung einer faserigen Bodenbedeckung.

2. Verwendung nach Anspruch 1, dadurch

gekennzeichnet, dass die bituminöse Komponente eine Penetration von 1 bis 25 (0,1 mm) bei 25°C aufweist.

3. Verwendung nach Anspruch 1 oder 2, dadurch gekennzeichnet, dass die bituminöse Komponente auch 0,1 bis 75 Gew.-%, vorzugsweise von 5 bis 60 Gew.-%, bezogen auf das Gewicht des Bitumens, eines Wachses enthält.

4. Verwendung nach einem der Ansprüche 1 bis 3, dadurch gekennzeichnet, dass das Wachs einen Erstarrungspunkt von 50 bis 70°C aufweist.